# EUROPÄISCHE PATENTSCHRIFT

(11) **EP 2 034 387 B1**
(45) Veröffentlichungstag und Bekanntmachung des Hinweises auf die Patenterteilung: **27.07.2011**
(21) Anmeldenummer: 08405213.3
(22) Anmeldetag: 04.09.2008
(51) Int. Cl.: G06F 1/20, G06F 1/18

(54) **Passiv gekühlter Computer**
Passively cooled computer
Ordinateur refroidi passivement

(30) Priorität: 07.09.2007 CH 13992007
(43) Veröffentlichungstag der Anmeldung: 11.03.2009
(73) Patentinhaber: Kontron AG, 85386 Eching (DE)
(72) Erfinder: Kunz, Felix, 4500 Solothurn (CH)
(74) Vertreter: Verscht, Thomas Kurt Albert

(56) Entgegenhaltungen:
- US-A- 4 953 058
- US-A1- 2004 156 180
- US-A1- 2006 198 112
- US-B1- 6 459 577

## Beschreibung

Die Erfindung bezieht sich auf das Gebiet der elektronischen Datenverarbeitungseinrichtungen. Sie bezieht sich insbesondere auf einen passiv gekühlten Computer gemäss dem Oberbegriff des Patentanspruches 1.

### STAND DER TECHNIK

Ein derartiger Computer ist beispielsweise aus US 7,095,611 bekannt. Der Gehäusedeckel und -Boden dieses Computers sind als Kühlelemente ausgebildet. Intern ist der Computer in einen oberen, heissen Teil, und einen unteren, kühleren Teil unterteilt. Bauelemente mit höheren Wärmeverlusten, beispielsweise der Prozessor, sind im oberen Teil angeordnet. Es hat sich gezeigt, dass die Temperatur der Kühlelemente als unangenehm empfunden werden kann, und dass die abführbare Wärmeleistung begrenzt ist.

US 5,671,120 zeigt einen Personal Computer, bei welchem eine Seite des Gehäuses als Kühlkorper ausgebildet ist und den Prozessor kühlt. Die anderen Seiten des Gehäuses bestehen aus gelochten Platten, welche einen Luftstrom durch das gesamte innere Gehäusevolumen ermöglichen. Durch die Öffnungen in den Gehäusewänden können Fremdkörper eindringen und den Computer beschädigen.

US 4,980,848 zeigt einen Laptop Computer, bei welchem Bauteile, die gekühlt werden müssen, hinter dem Bildschirm angeordnet sind, und ein Zwischenraum innerhalb des Bildschirmgehäuses luftdurchströmt ist. Das Bildschirmgehäuse weist an einer unteren Seite Lufteinströmöffnungen und an einer oberen Seite Luftausströmöffnungen auf, so dass Wärme durch Konvektion in der Luft wegtransportiert wird.

US 2006/198112 A1 zeigt einen Computer mit drei Abschnitten. Im einem mittleren Abschnitt befindet sich eine Harddisk mit oben angebrachten Kühlrippen. In einem benachbarten Abschnitt ist ein Satz von senkrecht verlaufenden Kühlrippen zur Kühlung von Schaltkreisen angeordnet. Die Kühlrippen bilden einen internen Kanal, und es können in Boden und Deckel entsprechende Löcher vorliegen. Ein Ventilator ist optional.

US 2004/156180 A1 beschreibt einen passiv gekühlten Computer mit nach aussen gerichteten Kühlrippen. Dazwischen ist u.A. ein Motherboard angeordnet, so dass der Prozessor durch federnde Aufhängungen gegen einen der Kühlkörper gepresst wird. Die Harddisk liegt zwischen den Kühlkörpern und ist durch eine flexible Schicht zur Vibrationsdämpfung von diesen getrennt.

Bei den bekannten Lösungen ist die Abfuhr der Wärme von den verschiedenen Komponenten des Computers nicht ausreichend, so dass die Rechenleistung moderner Prozessoren nicht genutzt werden kann.

### DARSTELLUNG DER ERFINDUNG

Es ist deshalb Aufgabe der Erfindung, einen passiv gekühlten Computer der eingangs genannten Art zu schaffen, welche die oben genannten Nachteile behebt.

Diese Aufgabe löst ein passiv gekühlter Computer mit den Merkmalen des Patentanspruches 1.

Im erfindungsgemässen passiv gekühlten Computer sind also zwei oder mehr Komponenten in einem Gehäuserahmen angeordnet, wobei jeder dieser Komponenten ein Kühlkörper zum Abführen der Verlustwärme der Komponente im Betrieb zugeordnet ist. Mindestens eine Massenspeichereinheit ist thermisch an einer der Kühlkörper zum Abführen der Verlustwärme der mindestens einen Massenspeichereinheit gekoppelt. Dabei weisen die Kühlkörper jeweils eine Kühloberfläche auf, und sind diese Kühlkörper mit ihren Kühloberflächen gegeneinander gerichtet, und definieren mindestens einen vertikal durch das Innere des Gehäuserahmens führenden Luftkanal.

Der Kühlkörper der Massenspeichereinheit ist einer der Kühlkörper, welche den Luftkanal bilden. Die mindestens eine Massenspeichereinheit ist gemeinsam mit dem thermisch angekoppelten Kühlkörper schwingend aufgehängt und Starr an dem thermisch angekoppelten Kühlkörper gekoppelt.

Dadurch wird es möglich, die gesamte Abwärme des Computers ohne aktive Kühlung, d.h. insbesondere ohne Ventilatoren, soweit abzuführen, dass die Betriebstemperaturen im Computer langfristig tief und in einem für Dauerbetrieb zulässigen Bereich bleiben. Der vertikale, durch das gesamte Gehäuse führende Luftkanal bewirkt eine Kaminwirkung, welche die kühlende Luft durch den Kanal fördert. Diese Kaminwirkung tritt in der Regel ab einer Kanallänge von rund 20 cm oder mehr auf (Der Begriff "senkrecht" oder "vertikal" bezieht sich in der gesamten Anmeldung jeweils auf die Orientierung des Computers in seiner Betriebsstellung).

Vorzugsweise ist der Luftkanal durch die Kühlkörper gegenüber dem übrigen Volumen im Gehäuserahmen im wesentlichen abgeschlossenen. Die Kühlluft kommt dadurch nur mit den Kühlflächen der Kühlkörper in Berührung. Dadurch, dass ein abgeschlossener Kühlkanal vorliegt, also da keine Luftlöcher im Gehäuse oder in den Kühlkörpern vorliegen müssen, kann eine Beschädigung der Komponenten des Computers durch hineinfallende Teile eliminiert werden.

In einer bevorzugten Ausführungsform der Erfindung weist der Luftkanal eine untere Lufteintrittsöffnung und eine obere Luftaustrittsöffnung auf, und ist die Lufteintrittsöffnung durch die Gestaltung des Gehäuserahmens von einer Standfläche, auf welcher der Computer steht, beabstandet. Damit wird der Kamin zwischen den Kühlkörpern mit Luft versorgt. Vorzugsweise weist dazu der Gehäuserahmen einen Boden mit einer Öffnung entsprechend der Lufteintrittsöffnung des Luftkanals auf, und ist der Boden durch Fusselemente von der Standfläche, auf welcher der Computer steht, beabstandet.

Diese Anordnung ermöglicht es, die Verlustwärme eines Computers normaler Leistung passiv, d.h. ohne Ventilatoren, abzuführen, ohne dass die Rechenleistung des Computers und seiner Komponenten, insbesondere Prozessor, Massenspeicher, Netzteil etc. wesentlich eingeschränkt werden muss.

Der Gehäuserahmen bildet vorzugsweise das tragende Gerüst, an welchem die Komponenten oder Baugruppen des Computers wie Prozessor(en), flüchtiger Hauptspeicher (RAM), Massenspeicher wie Festplattenspeicher, CD und/oder DVD-Laufwerke, Schnittstellen-Adapter, Netzteil und/oder Akkus, etc. montiert sind. Der Gehäuserahmen besteht vorzugsweise aus dünnen Blechteilen, beispielsweise mit einer Dicke von rund einem Millimeter. Damit ist die thermische Entkopplung zwischen den verschieden heissen Baugruppen verbessert. Um weitere thermische Brücken zwischen verschiedenen Gehäuseabschnitten zu reduzieren, sind allfällig vorhandene metallische Gehäuseverschalungselemente ausserhalb des Gehäuserahmens angeordnet und sind durch einen Luftspalt vom Gehäuserahmen beabstandet.

An der Oberseite des Gehäuses kann eine luftdurchlässige Verschalung angeordnet sein, welche (in horizontaler Richtung gesehen) einen runden Querschnitt aufweist. Dadurch wird vermieden, dass Gegenstände auf dem Gehäuse abgelegt werden und so den Luftkanal verschliessen.

Als Ergebnis weisen unterschiedliche Abschnitte des Computers unterschiedliche Temperaturen auf, welche den Betriebsbereichen der Komponenten Rechnung tragen. "Heisse" Baugruppen wie die Prozessoreinheit sind somit von "kühlen" Baugruppen wie Festplatten und von Leistungseinheiten wie dem Netzteil getrennt.

In einer bevorzugten Ausführungsform der Erfindung ist die mindestens eine Massenspeichereinheit ein Festplattenlaufwerk.

Die mindestens eine Massenspeichereinheit ist gemeinsam mit ihrem thermisch angekoppelten Kühlkörper schwingend aufgehängt. Das heisst, diese Massenspeichereinheit ist starr an dem zugeordneten Kühlkörper angekoppelt. Durch die schwingende Aufhängung ist einerseits der Kühlkörper von den übrigen Kühlkörpern thermisch getrennt; andererseits sind auch Vibrationen der Massenspeichereinheit - typischerweise einer Festplatte - vom übrigen Gehäuse entkoppelt. Damit werden fast keine Laufgeräusche an das Gehäuse übertragen, was zu einem fast lautlosen Betrieb des Computers führt.

Vorzugsweise geschieht diese Aufhängung mittels flexibler Elemente an einem gegenüberliegenden Kühlkörper, also mit einem der Kühlkörper, mit welchem der Kühlkörper der Massenspeichereinheit einen Luftkanal bildet.

Vorzugsweise sind auch mindestens eine Prozessoreinheit und ein Netzteil jeweils thermisch an einen jeweils eigenen, zugeordneten Kühlkörper angekoppelt. Diese eigenen Kühlkörper sind vorzugsweise thermisch getrennt, d.h. sie berühren beispielsweise einander nicht, oder sind zumindest separate Kühlkörper.

Die genannten Kühlkörper sind vorzugsweise flächig ausgedehnt, und sind mit dieser Fläche vertikal angeordnet. Sie weisen vorzugsweise Kühlrippen auf, wobei die Kühlrippen insbesondere vertikal verlaufen. So kann ein Kamin, oder eine Mehrzahl von Teilkaminen, zwischen den vertikal verlaufenden Rippen von zwei mit den Rippen gegeneinander stehenden Kühlkörpern gebildet werden.

In einer weiteren bevorzugten Ausführungsform der Erfindung ist zwischen mindestens einem Paar von einander gegenüberliegenden Kühlkörpern eine Isolationsschicht angeordnet. Diese Schicht verläuft also parallel und zwischen den Kühlkörpern und erstreckt sich im wesentlichen über die ganze Fläche der beiden Kühlkörper. Damit sind die Kühlkörper bezüglich Wärmestrahlung voneinander entkoppelt, so dass fast kein Temperaturausgleich zwischen den Kühlkörpern stattfindet. Dadurch können Elemente und Kühlkörper mit unterschiedlichen Temperaturen gegeneinander angeordnet werden, ohne dass der heissere Kühlkörper den kühleren aufheizt.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1-4: teilweise aufgeschnittene Ansichten eines passiv gekühlten Computers;
- Figur 5: eine Anordnung von Kühlkörpern zur Bildung eines Luftkanals;
- Figur 6: eine Explosionszeichnung zu dieser Anordnung;
- Figur 7: einen Querschnitt durch diese Anordnung;
- Figur 8: ein Detail aus dem Bereich Z der Figur 7; und
- Figur 9: einen Querschnitt eines Details aus dem Bereich einer Gehäuseverschalung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

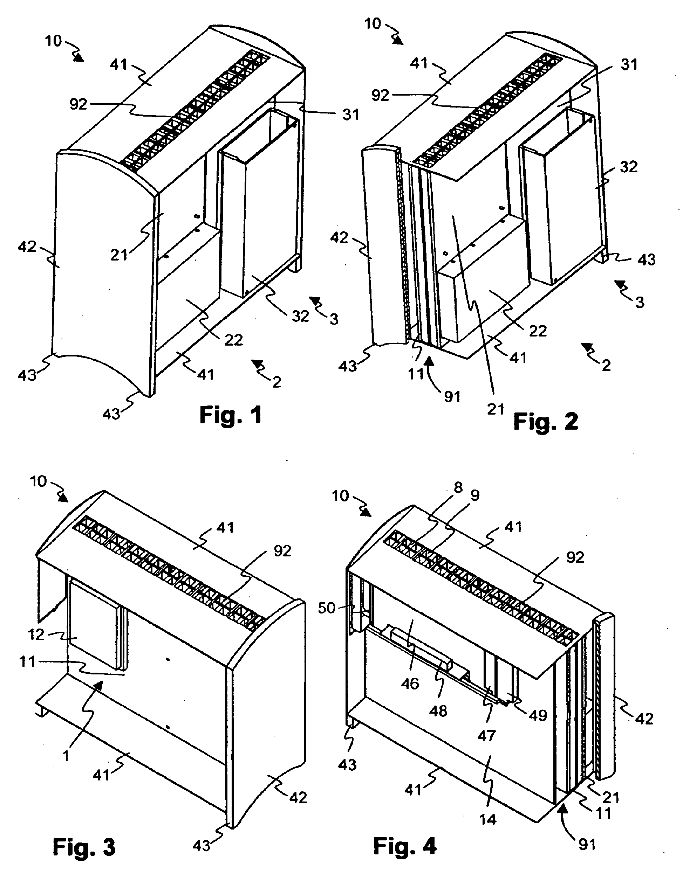

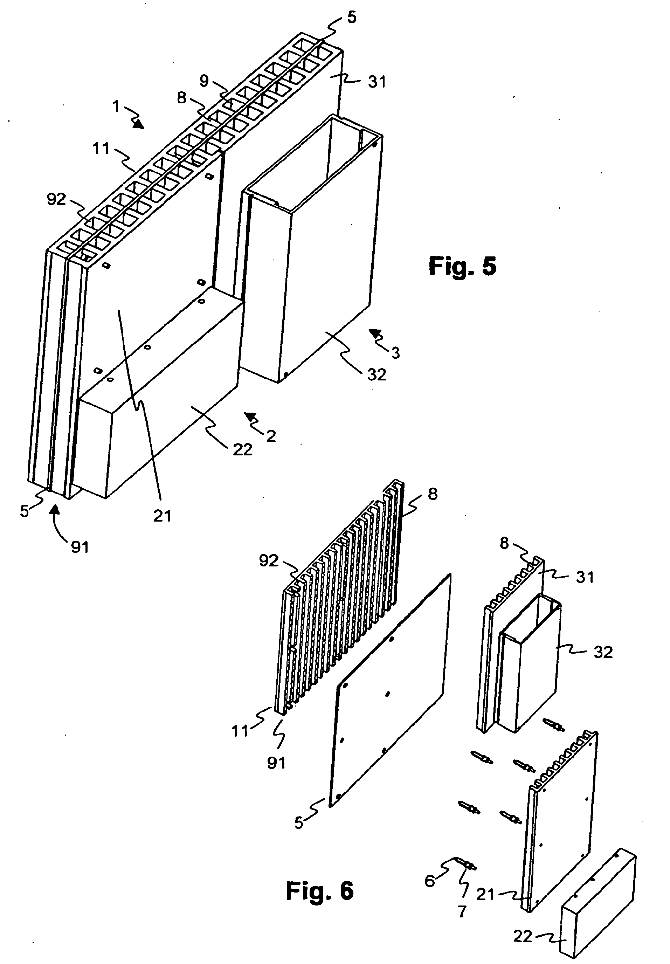

Die Hauptelemente eines gemäss der Erfindung gekühlten Computers sind in den **Figuren 1** bis **4** sichtbar. Der Computer ist dabei in seiner Betriebsstellung, also mit senkrecht angeordneten Kühlkanälen, gezeichnet. Die Hauptelemente der Kühlung, für sich alleine betrachtet, sind in den **Figuren 5** bis **7** sichtbar.

Der Computer 10 weist mehrere Baugruppen 1, 2, 3 auf, die in einem Gehäuse mit einem tragenden Gehäuserahmen 41 angeordnet sind:
- Eine Prozessoreinheit 1 mit einem oder mehreren Prozessoren 12 und weiteren Bauteilen, wie sie typischerweise auf einem Motherboard eines Computers verwendet werden. Der Prozessor 12 und evtl. andere Bauteile sind thermisch an einen Prozessorkühlkörper 11 angekoppelt, also beispielsweise mechanisch gegeneinander gepresst, mit einem wärmeleitenden Material zur Überbrückung von Zwischenräumen. Der Prozessorkühlkörper 11 ist in einem Randbereich mit dem Gehäuserahmen 41 verbunden.
- Eine Festplatteneinheit 2 mit einer oder mehreren Festplatten 22. Diese ist/sind thermisch mit einem Festplattenkühlkörper 21 verbunden. Der Festplattenkühlkörper 21 ist über eine schwingende Aufhängung aus Distanzbolzen 6 und Gummielementen 7 am gegenüberliegenden Prozessorkühlkörper 11 montiert. Dies ist in den **Figuren 6****,** **7** und **8** gut ersichtlich.
- Eine Netzteileinheit 3 mit einem Netzteil 32. Dieses ist thermisch mit einem Netzteilkühlkörper 31 verbunden. Der Netzteilkühlkörper 31 ist in einem Randbereich am Gehäuserahmen 41 befestigt. Das Netzteil 32 selber ist für eine passive Kühlung ausgelegt.

Die Kühlkörper 11, 21, 31 sind im wesentlichen flächig und weisen jeweils auf einer Kühloberfläche welche von den jeweiligen zu kühlenden Bauelementen abgewandt sind, Kühlrippen 8 auf. Die Kühloberflächen sind im wesentlichen (beim Betrieb des Computers) vertikal angeordnet, wobei auch die Kühlrippen 8 in vertikaler Richtung verlaufen.

Die Kühlkörper 11, 21, 31 definieren mit ihren Kühloberfläche einen oder mehrere Luftkanäle 9. Diese verlaufen, entsprechend der Orientierung der Kühloberflächen respektive der Kühlrippen 8 ebenfalls vertikal, und sind durch die Kühlkörper 11, 21, 31 gegenüber dem übrigen Volumen des Gehäuserahmens 41 abgeschlossen.

Der oder die Luftkanäle 9 bilden an ihrem gemeinsamen unteren Ende eine Lufteintrittsöffnung 91, und an ihrem gemeinsamen oberen Ende eine Luftaustrittsöffnung 92. Entsprechend liegen im Bereich dieser Öffnungen auch Öffnungen des Gehäuserahmens 41 vor. Unterhalb der Lufteintrittsöffnung 91 wird die Luft seitlich zugeführt, indem die Lufteintrittsöffnung 91 gegenüber der Standfläche des Computers 10 erhöht ist. Dies geschieht beispielsweise, indem der Gehäuserahmen 41 durch Füsse 43 erhöht wird. Alternativ weist der Gehäuserahmen 41 seitliche Lufteintrittsöffnungen auf, und einen Hohlraum, welcher von diesen zur Lufteintrittsöffnung 91 führt.

Oberhalb der Luftaustrittsöffnung 92 ist vorzugsweise eine Gehäuseverschalung mit obenliegenden und/oder seitlichen Luftaustrittsöffnungen angeordnet. Diese kann konvex gekrümmt sein oder eine schräge Oberfläche aufweisen, um zu vermeiden, dass der Luftaustritt durch auf dem Computer abgelegte Gegenstände behindert wird.

In der gezeigten Ausführungsform der Erfindung sind der Festplattenkühlkörper 21 vom Netzteilkühlkörper 31 getrennt, d.h. aus getrennten Körpern gefertigt, und liegen mit ihren Kühloberllächen der Kühloberfläche des Prozessorkühlkörpers 11 gegenüber. Vorzugsweise ist zwischen den einander gegenüberliegenden Kühloberflächen eine Isolation 5 angeordnet, um einen Temperaturausgleich durch Strahlung zu verhindern. Diese Isolation 5 besteht beispielsweise aus einem ca. einem Millimeter dicken, wärmebeständigen Kunststoff.

Der Gehäuserahmen 41 kann durch aussenliegende Verschalungselemente verkleidet sein, beispielsweise durch eine Gehäuseverschalung 42. Diese deckt mindestens eine Seitenfläche des Computers 10 ab. Aus ästhetischen oder mechanischen Gründen kann eine Gehäuseverschalung 42 aus Metall erwünscht sein. Um einen Wärmeübergang von einer Gehäuseseite zur anderen zu verhindern wird eine solche Gehäuseverschalung 42 nicht einfach flach auf den Gehäuserahmen 41 geschraubt, sondern weist eine Ausfräsung 44 auf und/oder ist durch Distanzelemente 45 am Gehäuserahmen 41 befestigt, so dass eine isolierende Luftschicht zwischen Gehäuserahmen 41 und Gehäuseverschalung 42 vorliegt.

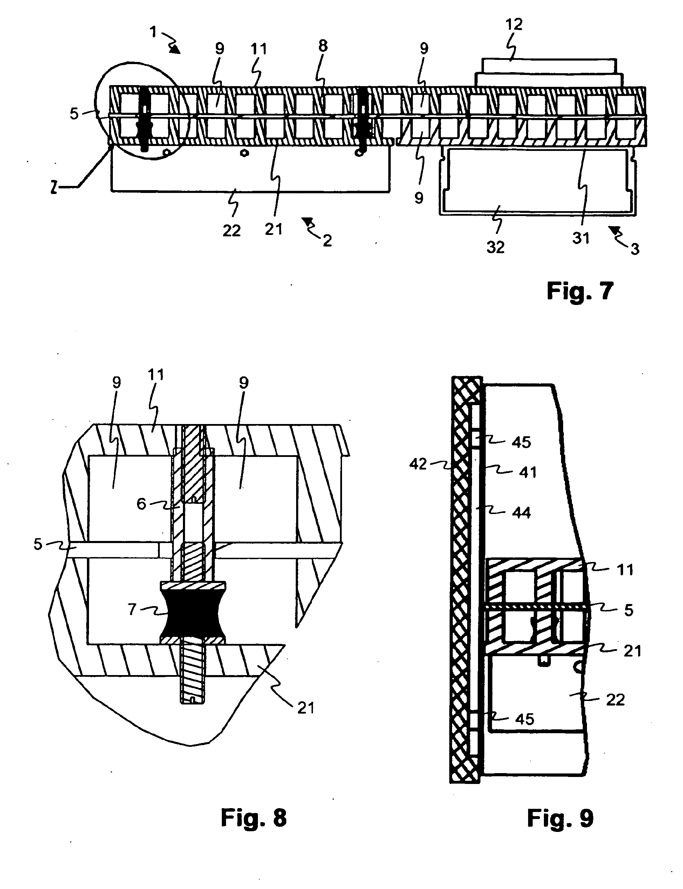

Die gezeigte Endplatte der Gehäuseverschalung 42 weist somit einerseits Füsse 43 zur Erhöhung des Gehäuserahmens 41 auf, und ferner eine innenliegende Ausfräsung 44. **Figur 9** zeigt einen horizontalen Querschnitt durch eine Endplatte und den angrenzenden Bereich des Gehäuserahmens 41. Der tragende Gehäuserahmen 41 aus dünnem Blech bildet also keine nennenswerte Brücke, welche Wärme vom heisseren Bereich der Prozessoreinheit 1 und des Prozessorkühlkörpers 11 in den kühleren Bereich der Netzteileinheit 3 mit dem Netzteilkühlkörper 31 transportieren könnte. Damit dies auch nicht durch die Gehäuseverschalung 42 geschieht, ist diese durch den Luftspalt der Ausfräsung 44 thermisch vom Gehäuserahmen 41 getrennt.

Die **Figur 4** zeigt ein Motherboard 14 (Hauptplatine), welches parallel zum Prozessorkühlkörper 11 angeordnet ist, und weitere elektronische Bauelemente des Computers trägt. Der Prozessor 12 ist mit seinen Anschlüssen mit dem Motherboard 14 verbunden. In einer anderen bevorzugten Ausführungsform der Erfindung ist der Prozessor fest mit dem Motherboard 14 verbunden und stellt der in den Figuren mit 12 dargestellte Block einen Kühlblock dar, der gegen den Prozessor gepresst wird und die Wärme des Prozessors zum Prozessorkühlkörper 11 führt.

In der **Figur 4** ist ferner ein Steckkartenträger 46 gezeichnet. Dieser weist eine vertikal angeordnete Grundplatte auf, welche mittels eines Bügels 50 aus dem Computer 10 herausziehbar ist, und im eingesteckten Zustand mit einem Einschubstecker 47 in einem Slot 49 des Computers 10 eingesteckt ist. Der Steckkartenträger 46 weist mindestens einen Einschubstecker 48 auf, in welchen eine Erweiterungskarte (nicht eingezeichnet) eingesteckt werden kann, und zwar derart, dass die Erweiterungskarte ebenfalls senkrecht angeordnet ist. Dadurch kann auch die Erweiterungskarte durch einen vertikalen Luftstrom passiv gekühlt werden.

Durch eine Kombination der genannten Massnahmen wird beispielsweise erreicht, dass der Temperaturunterschied zwischen verschiedenen Baugruppen auch im stationären Zustand, nach mehreren Stunden, signifikant hoch bleibt. Beispielsweise beträgt die Temperatur der Prozessoreinheit dann rund 70°C, diejenige einer Festplatteneinheit rund 35°C. Die vertikalen Kühlkörper 11, 21, 31 und Luftkanäle 9 teilen also den Computer 10 in einen wärmeren Teil auf der einen Seite der Luftkanäle 9 (mit Baugruppen mit einer relativ hohen Verlustleistung) und einen kühleren Teil auf der anderen Seite der Luftkanäle 9 (mit Baugruppen mit einer relativ niedrigen Verlustleistung).

In einem beispielhaften Computer gemäss der Erfindung ist es möglich, eine maximale Leistung von bis zu ca. 150 W abzuführen. Dazu sind rund 4 kg Aluminium in Form von Kühlkörpern integriert. Die Aussenmasse des Gehäuserahmens 41 betragen rund 40 cm (Höhe) mal 40 cm (Tiefe) mal 18 cm (Breite).

### BEZUGSZEICHENLISTE

- 1: Prozessoreinheit
- 11: Prozessorkühlkörper
- 12: Prozessor
- 14: Motherboard
- 2: Festplatteneinheit
- 21: Festplattenkühlkörper
- 22: Festplatte
- 3: Netzteileinheit
- 31: Netzteilkühlkörper
- 32: Netzteil
- 41: Gehäuserahmen
- 42: Gehäuseverschalung
- 43: Füsse
- 44: Ausfräsung
- 45: Distanzelement
- 46: Steckkartenträger
- 47: Einschubstecker
- 48: Kartenstecker
- 49: Slot
- 50: Bügel
- 5: Isolation
- 6: Distanzbolzen
- 7: Gummielement
- 8: Kühlrippe
- 9: Luftkanal

- 91: Lufteintrittsöffnung
- 92: Luftaustrittsöffnung
- 10: Computer

## Patentansprüche

1. Passiv gekühlter Computer (10), aufweisend zwei oder mehr in einem Gehäuserahmen (41) angeordnete Komponenten (12, 22, 32), wobei jeder dieser Komponenten (12, 22, 32) ein Kühlkörper (11, 21, 31) zum Abführen der Verlustwärme der Komponente (12, 22, 32) im Betrieb zugeordnet ist, mindestens eine Massenspeichereinheit (22) thermisch an einen der Kühlkörper (21) zum Abführen der Verlustwärme der mindestens einen Massenspeichereinheit (22) gekoppelt ist,
wobei mindestens ein vertikal durch das Innere des Gehäuserahmens (41) führender Luftkanal (9) vorliegt,
**dadurch gekennzeichnet, dass** die Kühlkörper (11, 21, 31) jeweils eine Kühloberfläche aufweisen, und diese Kühlkörper mit ihren Kühloberflächen gegeneinander gerichtet sind und **dadurch** den vertikal durch das Innere des Gehäuserahmens (41) führenden Luftkanal (9) definieren,
der Kühlkörper (21) der Massenspeichereinheit (22) einer der Kühlkörper (11, 21, 31) ist, welche den Luftkanal (9) bilden,
die mindestens eine Massenspeichereinheit (22) gemeinsam mit dem thermisch angekoppelten Kühlkörper (21) schwingend aufgehängt ist, und
die mindestens eine Massenspeichereinheit (22) starr an den thermisch angekoppelten Kühlkörper (21) gekoppelt ist.

2. Passiv gekühlter Computer (10) gemäss Anspruch 1, wobei der Luftkanal (9) durch die Kühlkörper (11, 21, 31) gegenüber dem übrigen Volumen im Gehäuserahmen im wesentlichen abgeschlossen ist.

3. Passiv gekühlter Computer (10) gemäss Anspruch 1 oder 2, wobei die Massenspeichereinheit (22) ein Festplattenlaufwerk ist.

4. Passiv gekühlter Computer (10) gemäss Anspruch 1, wobei die mindestens eine Massenspeicher einheit (22) und der an diesen thermisch angekoppelte Kühlkörper (21) mittels flexibler Elemente (7) an einem gegenüberliegenden Kühlkörper (11) aufgehängt sind.

5. Passiv gekühlter Computer (10) gemäss Anspruch 4, wobei die mindestens eine Massenspeicher einheit (22) und der an diesen thermisch angekoppelte Kühlkörper (21) nur an dem gegenüberliegenden Kühlkörper (11) aufgehängt sind.

6. Passiv gekühlter Computer (10) gemäss einem der Ansprüche 2 bis 5, aufweisend mindestens eine Prozessoreinheit (1) und ein Netzteil (3), welche jeweils thermisch an einen jeweils eigenen, zugeordneten der Kühlkörper (11, 31) angekoppelt sind.

7. Passiv gekühlter Computer (10) gemäss einem der vorangehenden Ansprüche, wobei die Kühlkörper (11, 21, 31) flächig ausgedehnt sind, und insbesondere vertikal angeordnet sind.

8. Passiv gekühlter Computer (10) gemäss einem der vorangehenden Ansprüche, wobei die Kühlkörper (11, 21, 31) an ihren Kühloberflächen Kühlrippen (8) aufweisen, wobei die Kühlrippen (8) von mindestens zweien der Kühlkörper (8) gegeneinander gerichtet sind und vertikale Kanäle bilden.

9. Passiv gekühlter Computer (10) gemäss einem der vorangehenden Ansprüche, wobei zwischen Kühlrippen (8) von mindestens einem Paar von einander gegenüberliegenden Kühlkörpern (11, 21, 31) eine Isolationsschicht (5) zur thermischen Isolation angeordnet ist.

10. Passiv gekühlter Computer (10) gemäss einem der vorangehenden Ansprüche, wobei der Luftkanal (9) eine untere Lufteintrittsöffnung (91) und eine obere Luftaustrittsöffnung (92) aufweist, und die Lufteintrittsöffnung (91) durch die Gestaltung des Gehäuserahmens (41) von einer Standfläche, auf welcher der Computer (10) steht, beabstandet ist.

11. Passiv gekühlter Computer (10) gemäss Anspruch 10, wobei der Gehäuserahmen (41) einen Boden mit einer Öffnung entsprechend der Lufteintrittsöffnung (91) des Luftkanals (9) aufweist, und der Boden durch Fusselemente (43) von der Standfläche, auf welcher der Computer (10) steht, beabstandet ist.

12. Passiv gekühlter Computer (10) gemäss einem der vorangehenden Ansprüche, wobei der Gehäuserahmen (41) aus dünnen Blechteilen besteht, welche vorzugsweise eine Dicke von rund einem Millimeter aufweisen.

13. Passiv gekühlter Computer (10) gemäss Anspruch 12, aufweisend metallische Gehäuseelemente (42), welche ausserhalb des Gehäuserahmens (41) angeordnet sind, mindestens eine Seitenfläche des Computers (10) abdecken, und durch einen Luftspalt vom Gehäuserahmen (41) beabstandet sind.

## Claims

1. Passively cooled computer (10), comprising two or more components (12, 22, 32) arranged in a housing frame (41), wherein each of these components (12, 22, 32) is associated with a cooling body (11, 21, 31) for dissipating waste heat of the component (12, 22, 32) in operation,
at least one mass storage unit (22) is thermally coupled to one of the cooling bodies (21) for dissipating the waste heat of the at least one mass storage unit (22),
wherein at least one air channel (9) leading vertically through the inside of the housing frame (41) is provided,
**characterized in that** the cooling bodies (11, 21, 31) each comprise a cooling surface, and these cooling bodies are arranged with their cooling surfaces to face one another and thereby define the air channel (9) leading vertically through the inside optic housing frame (41),
the cooling body (21) of the mass storage unit (22) is one of the cooling bodies (11, 21, 31) forming the air channel (9),
the at least one mass storage unit (22) is jointly with cooling body (21), to which it is thermally coupled, flexibly suspended, and
the at least one mass storage unit (22) is rigidly coupled to the cooling body (21) to which it is thermally coupled.

2. Passively cooled computer (10) of claim 1, wherein the air channel (9) is substantially secluded from the remaining volume within the housing frame by the cooling bodies (11, 21, 31).

3. Passively cooled computer (10) of claim 1 or 2, wherein the mass storage unit (22) is a hard disk drive.

4. Passively cooled computer (10) of claim 1, wherein the at least one mass storage unit (22) and the cooling body (21) thermally coupled thereto are suspended on an opposite cooling body (11) using flexible elements (7).

5. Passively cooled computer (10) of claim 4, wherein the at least one mass storage unit (22) and the cooling body (21) coupled thereto are suspended to only the opposite cooling body (11).

6. Passively cooled computer (10) of any of claims 2 to 5, comprising at least one processor unit (1) and a power supply (3), which each are thermally coupled to a respective own associated one of the cooling bodies (11, 31).

7. Passively cooled computer (10) of any of the preceeding claims, wherein the cooling bodies (11, 21, 31) each extend in a plane and, in particular, are arranged vertically.

8. Passively cooled computer (10) of any of the preceeding claims, wherein the cooling bodies (11, 21, 31) comprise cooling ribs (8) on their cooling surfaces, wherein the cooling ribs (8) of at least two of the cooling bodies (8) are facing each other and form vertical channels.

9. Passively cooled computer (10) of any of the preceeding claims, wherein between cooling ribs (8) of at least one pair of opposite cooling bodies (11, 21, 31) an insulation layer (5) is arranged for thermal insulation.

10. Passively cooled computer (10) of any of the preceeding claims, wherein the air channel (9) comprises a lower air inlet opening (91) and an upper air outlet opening (92), and the air inlet opening (91) is spaced from a surface on which the computer (10) is placed by the design of the housing frame.

11. Passively cooled computer (10) of claim 10, wherein the housing frame (41) comprises a floor with an opening (91) corresponding to the air inlet opening (91) of the air channel (9) and the floor is spaced, by means of foot elements (43), from the surface on which the computer (10) is placed.

12. Passively cooled computer (10) of any of the preceeding claims, wherein the housing frame (41) consists of thin sheet metal parts which preferably have a thickness of about one millimeter.

13. Passively cooled computer (10) of claim 12, comprising metallic housing elements (42) which are arranged outside the housing frame (41), cover at least one side face of the computer (10), and are spaced from the housing frame (41) by an air gap.

## Revendications

1. Ordinateur (10) à refroidissement passif, comportant deux composants (12, 22, 32), ou plus, disposés dans un boîtier (41), étant précisé qu'un corps de refroidissement (11, 21, 31) destiné à évacuer la chaleur dissipée des composants (12, 22, 32) en fonctionnement est associé à chacun de ces composants (12, 22, 32),
et qu'au moins une unité de mémoire de masse (22) est couplée thermiquement à l'un des corps de refroidissement (21) destinés à évacuer la chaleur dissipée de ladite unité de mémoire de masse (22),
et étant précisé qu'il y a au moins un conduit d'air (9) qui traverse à la verticale l'intérieur du boîtier (41),
**caractérisé en ce que** les corps de refroidissement (11, 21, 31) présentent chacun une surface de refroidissement, et ces corps de refroidissement sont dirigés les uns vers les autres avec leurs surfaces de refroidissement et définissent ainsi le conduit d'air (9) qui traverse à la verticale l'intérieur du boîtier (41),
le corps de refroidissement (21) de l'unité de mémoire de masse (22) est constitué par l'un des corps de refroidissement (11, 21, 31) qui forment le conduit d'air (9),
ladite unité de mémoire de masse (22), avec le corps de refroidissement (21) couplé thermiquement, est suspendue de manière oscillante, et
ladite unité de mémoire de masse (22) est couplée rigidement au corps de refroidissement (21) couplé thermiquement.

2. Ordinateur (10) à refroidissement passif selon la revendication 1, étant précisé que le conduit d'air (9) est globalement fermé par les corps de refroidissement (11, 21, 31) par rapport au reste du volume du boîtier.

3. Ordinateur (10) à refroidissement passif selon la revendication 1 ou 2, étant précisé que l'unité de mémoire de masse (22) est constituée par un lecteur de disque dur.

4. Ordinateur (10) à refroidissement passif selon la revendication 1, étant précisé que ladite unité de mémoire de masse (22) et le corps de refroidissement (21) couplé thermiquement à celle-ci sont suspendus à l'aide d'éléments flexibles (7) à un corps de refroidissement (11) opposé.

5. Ordinateur (10) à refroidissement passif selon la revendication 4, étant précisé que ladite unité de mémoire de masse (22) et le corps de refroidissement (21) couplé thermiquement à celle-ci ne sont suspendus qu'au corps de refroidissement (11) opposé.

6. Ordinateur (10) à refroidissement passif selon l'une des revendications 2 à 5, comportant au moins une unité de processeur (1) et un bloc d'alimentation (3) qui sont couplés thermiquement à un corps de refroidissement individuel (11, 31) qui leur est associé.

7. Ordinateur (10) à refroidissement passif selon l'une des revendications précédentes, étant précisé que les corps de refroidissement (11, 21, 31) ont une extension plane et sont disposés en particulier à la verticale.

8. Ordinateur (10) à refroidissement passif selon l'une des revendications précédentes, étant précisé que les corps de refroidissement (11, 21, 31) présentent sur leurs surfaces de refroidissement des nervures de refroidissement (8), les nervures de refroidissement (8) d'au moins deux des corps de refroidissement (8) étant dirigées les unes vers les autres et formant des conduits verticaux.

9. Ordinateur (10) à refroidissement passif selon l'une des revendications précédentes, étant précisé qu'il est prévu, entre les nervures de refroidissement (8) d'au moins une paire de corps de refroidissement (11, 21, 31) opposés une couche isolante (5) pour l'isolation thermique.

10. Ordinateur (10) à refroidissement passif selon l'une des revendications précédentes, étant précisé que le conduit d'air (9) présente une ouverture d'entrée d'air inférieure (91) et une ouverture de sortie d'air supérieure (92), et l'ouverture d'entrée d'air (91), grâce à la forme du boîtier (41), est espacée d'une surface d'appui sur laquelle est posé l'ordinateur (10).

11. Ordinateur (10) à refroidissement passif selon la revendication 10, étant précisé que le boîtier (41) présente un fond avec une ouverture correspondant à l'ouverture d'entrée d'air (91) du conduit d'air (9), et le fond est espacé, grâce à des éléments formant pieds (43), de la surface d'appui sur laquelle est posé l'ordinateur (10).

12. Ordinateur (10) à refroidissement passif selon l'une des revendications précédentes, étant précisé que le boîtier (41) se compose de minces pièces de tôle qui présentent de préférence une épaisseur d'environ un millimètre.

13. Ordinateur (10) à refroidissement passif selon la revendication 12, comportant des éléments de boîtier métalliques (42) qui sont disposés à l'extérieur du boîtier (41), qui couvrent au moins une surface latérale de l'ordinateur (10) et qui sont espacés du boîtier (41) par un intervalle.
